# NEW EUROPEAN PATENT SPECIFICATION

(11) **EP 0 372 625 B2**
(45) Date of publication and mention of the opposition decision: **12.07.1995**
(45) Mention of the grant of the patent: 20.01.1993
(21) Application number: 89203022.2
(22) Date of filing: 28.11.1989
(51) Int. Cl.: A23D 7/00, A23C 15/16

(54) **Low fat spread**
Brotaufstrich mit niedrigem Fettgehalt
Produit à tartiner à faible teneur en matières grasses

(30) Priority: 07.12.1988 GB 8828596
(43) Date of publication of application: 13.06.1990
(73) Proprietor: UNILEVER N.V., 3013 AL Rotterdam (NL); UNILEVER PLC, London EC4P 4BQ (GB)
(72) Inventor: Jones, Malcolm Glyn, Stevington Bedfordshire, MK43 7QF (GB); Norton, Ian Timothy, Rushden Northamptonshire, NN10 9EZ (GB)
(74) Representative: Mulder, Cornelis Willem Reinier, Dr.

(56) References cited:
- EP-A- 0 098 664
- EP-A- 0 192 284
- EP-A- 0 237 120
- EP-A- 0 271 132
- EP-A- 0 279 498
- EP-A- 0 279 499
- EP-A- 0 297 690
- CH-A- 436 947
- GB-A- 1 094 268
- GB-A- 2 035 360

## Description

The present invention is concerned with a low fat spread comprising a substantial amount of butterfat. Spreads of this type are known in the art and normally contain about 40% fat. Such known products comprise a fat phase that consists of a blend of buffer oil and vegetable fat or alternatively of essentially pure butter oil. The main reason for including butterfat in spreads is that thus more buffer-like properties may be imparted to these products. Such butter-like properties are highly appreciated by most consumers.

We have found now that spreads of very low fat content having strong butter-like properties are obtained if such spreads comprise an aqueous phase that has a very low protein content, a high gelling hydrocolloid content and a relatively small mean droplet size. In a first aspect the present invention therefore relates to a spread comprising from 5-35% by weight of a continuous fat phase and 95-65% by weight of a dispersed aqueous phase containing less than 200 ppm of protein, wherein the fat phase comprises at least 25% by weight, preferably at least 35% by weight of buffer oil or a fraction thereof and the aqueous phase comprises a galling hydrocolloid or combination of galling hydrocolloids at a concentration level of at least 3.3 times the critical concentration of said galling hydrocolloid or combination of gelling hydrocolloids, the volume weighted mean droplet size of the aqueous phase being less than 25 »m (microns).

In European patent application No. 0 237 120 spreads comprising less than 35 wt.% fat and a gel-forming aqueous phase having a relatively high viscosity are described. In the examples spreads are described comprising a fat phase consisting of a fat blend of vegetable origin and an aqueous phase containing a combination of gelling hydrocolloids at a concentration level of more than 3 times the critical concentration of said combination. The spreads according to the European application are said to typically have an average droplet size between about 30 and about 60 »m (microns).

European patent application No. 0 279 499 describes spreads comprising less than 30 wt.% of a continuous fat phase and an aqueous phase that contains protein or hydrocolloid or a mixture thereof, wherein the composition constituting the aqueous phase has a viscosity of less than 400 cps at 35°C and a shear rate of 1000 s⁻¹, and wherein the content of amino acid residues is less than 200 ppm calculated on the aqueous phase. In comparative example 4c a spread is described comprising a fat phase consisting of a fat blend of vegetable origin and an aqueous phase containing a galling hydrocolloid at a concentration level of more than 3 times the critical concentration.

"European patent application no. 0 279 498 spreads are described which contain less than 35% fat, a dispersed water phase with an average droplet size of less than 5 »m, but less than 0.2 wt.% gelling and or thickening agent."

When following the teaching of the above patent applications in the preparation of a very low fat spread of high butter oil content, spreads are obtained which possess some less desirable product characteristics such as brittleness, water loss on spreading and/or a relatively high hardness. We have found that distinctly improved butter oil containing spreads of very low fat content are obtained if such products meet the following set of criteria:
- the aqueous should contain less than 200 ppm of protein;
- the aqueous phase should comprise a gelling hydrocolloid or a combination of gelling hydrocolloids at a concentration level of at least 3.3 times the critical concentration of such gelling system;
- the volume weighted mean droplet size of the aqueous phase should be less than 25 »m (microns).

The spreads according to the present invention are easy spreadable, do not loose water on spreading and give a strong buffer impression. It is surprising that a spread according to the present invention containing, for instance, four times less butter fat than buffer and comprising an aqueous phase containing no dairy ingredients nevertheless has a strong butter impression. It is believed that this surprisingly strong buffer impression is a result of the successful tuning of, in combination, the aqueous droplet size distribution, the gelling hydrocolloid content and protein content of the aqueous phase.

The advantageous properties of the present spreads are particularly appreciated in spreads containing from 15-28% by weight of a continuous fat phase and 85-72% by weight of a dispersed aqueous phase. The spreads according to the invention also encompasses spreads which additionally contain a dispersed fat phase, i.e. spreads of the oil-in-water-in-oil type. Preferably the fat phase in the present spread is of an essentially continuous nature.

In this application the terms fat and oil are used interchangeably, unless indicated otherwise. By both fat and oil is meant an edible substance, which may be solid or liquid at ambient temperature, consisting essentially of triglycerides, or comprising non-aqueous, non-toxic, material having physical properties similar to triglycerides, which material may be indigestible, such as for example waxes, e.g. jojoba oil and poly fatty acid esters of mono- and di-saccharides, e.g. sucrose octa fatty acid aster, or mixture thereof.

The term hydrocolloid as used throughout this application has the same meaning as in ZFL 32 (1981) 6, 253-256. Except for gelatin, which is a protein, all hydrocolloids are polysaccharides. Since the present spreads may only contain up to 200 ppm protein the gelling hydrocolloids employed in the present spreads essentially consist of gelling polysaccharides. Preferably the aqueous phase comprises one or more gelling hydrocolloids selected from the group consisting of kappa-carrageenan, iota-carrageenan, agar, alginate, pectin, gellan, furcelleran and mixtures thereof. More preferably the gelling hydrocolloid is selected from the group consisting of kappa-carrageenan, iota-carrageenan and mixtures thereof.

The critical concentration of a gelling hydrocolloid is the concentration level at which said gelling hydrocolloid will start to form a gel. The critical concentration of the gelling hydrocolloid in the present spread is determined in an aqueous system which has exactly the same composition as the aqueous phase to be incorporated into the spread (with the exception of course of the water content and the concentration of said gelling hydrocolloid which have to be varied to establish the critical concentration).

The critical concentration of a gelling hydrocolloid in a particular composition can be calculated from measurements of the shear modulus of a series of samples containing different concentrations of gelling hydrocolloid, as described in Br. Polymer J. 17 (1985), 164. If a mixture of gelling hydrocolloids is used in the aqueous phase of the present low fat spread, then the critical concentration of said mixture is determined in a manner analogous to the procedure described above. The composition of the mixture of gelling hydrocolloids is kept constant and the weight concentration of said mixture is varied as if it consisted of only one single gelling hydrocolloid.

The volume weighted mean droplet size, whenever referred to in this document, is determined by means of NMR (see J. Colloid and Interface Science 10 (1972), 206 and 93 (1963), 521) using a log-normal distribution as is commonly employed for particle size analysis. The volume weighted mean droplet size of the aqueous phase of the present spreads preferably is in the range of 2-20 »m (microns). The volume weighted mean droplet size referred to in this document, is deemed to be equal to the volume weighted mean droplet diameter.

In a preferred embodiment of the present invention the aqueous phase contains less than 200 ppm amino acid residues. In an even more preferred embodiment the aqueous phase contains less than 100 ppm amino acid residues. The term amino acid residues as used in this application includes intact and denatured protein, di- and oligopeptides and free amino acids.

The solid fat content of a fat at a certain temperature "t" may suitably be described by the N-value of the fat at that temperature (Nₜ). The N-value at a certain temperature may be determined by means of NMR, using the method described in "Fette, Seifen, Anstrichmittel", 80 (1978), 180-186. In order to obtain spreads that give a strong butter-like impression we have found it beneficial to employ a fat phase that has a relatively high solid fat content at low temperatures, e.g. 5°C, but at the same time contains only a limited amount of solid fat at relatively high temperatures, e.g. 30°C. Thus preferably the fat phase has an N₅ value in the range of 40-70 and an N₃₀ value of less than 8.

The fat phase of the present spread may comprise butter oil as well as fractions thereof. We have found it to be particularly advantageous to incorporate into the fat phase at least 50 wt.% butter oil or a low melting fraction thereof. By a low melting fraction is meant a so called olein fraction, i.e. the liquid fraction that is obtained after separating the solid part of butter oil from the liquid part at a particular temperature. Preferably the low melting fraction used is obtained by fractionation at a temperature below 20°C.

We have found it very useful to include high concentration levels of gelling hydrocolloid in the aqueous phase of the present spreads since thus products are obtained that are significantly less brittle and more plastic. The aqueous phase contains a gelling hydrocolloid or a combination of gelling hydrocolloids at a concentration level of at least 3.3 times the critical concentration level of said galling hydrocolloid or combination of gelling hydrocolloids.

Due to the presence of relatively high levels of gelling agent, the aqueous phase of the present spread is relatively viscous. According to a very preferred embodiment the viscosity of the present spread, as measured at a temperature of 35°C and a shear rate of 200 s⁻, exceeds 120 cps. The viscosity can suitably be measured by means of a Haake T^{M} viscometer.

The spread according to the present invention can suitably contain ingredients such as colouring agents, flavourings, emulsifiers, thickeners, food grade acids etc. The present spread preferably contains from 0.5-2.5%, by weight of the fat phase, of emulsifier selected from the group consisting of: monoglycerides, diglycerides, phosphatides and mixtures thereof.

The invention is further illustrated by the following examples:

### Example 1

A spread comprising 20 wt.% of fat was prepared by mixing a fat phase and aqueous phase of following composition (in % by weight):

### Fat Phase

| | |
|---|---|
| Interesterified blend of palm oil (40%) and palm kernel oil (60%) | 12 % |
| Soybean oil hardened to a melting point of 38°C | 18 % |
| Butter olein (liquid fraction at 15°C, ex Corman, France) | 68.5 % |
| Hymono 4404™* | 1.5 % |

| | |
|---|---|
| * Monoglyceride composition essentially consisting of monoglycerides derived from sunflower oil and hydrogenated to a iodine value of about 40. | |

### Aqueous Phase

| | |
|---|---|
| Kappa Carrageenan | 2.5 % (x6960) ** |
| NaCl | 1.0 % |
| Water | 96.5 % |

| | |
|---|---|
| ** amino acid residue content of carrageenan: 0.07 wt.% | |

The critical concentration of the aqueous phase composition was found to be 0.5 wt.%. The N₅ value of the fat phase composition was 52, the N₃₀ was 0.

A spread was prepared by combining 1 part fat phase with 4 parts aqueous phase and subsequently passing the combined streams (at 50 g/min) through two C-units and a cavity transfer mixer (CTM), of the type described in EP-A 0 198 533. Both C-units had a jacket temperature of 5°C. The first C-unit was operated at 1000 rpm, the second at 1400 rpm and the CTM was operated at 1400 rpm.

The fat continuous product obtained had a C₅ value of 1200, was easy spreadable and did not loose water on spreading. The volume weighted mean droplet size was found to be 6 »m (microns). A team of people familiar with the evaluation of spreads was of the opinion that the butter impression of the product was very strong.

When 250 ppm caseinate is added to the aqueous phase, the product obtained looses water on spreading.

### Example 2

A spread containing 20 wt.% fat was prepared by mixing an aqueous phase and fat phase of following composition:

### Fat Phase

| | |
|---|---|
| Clarified butter oil | 98.5 % (by weight) |
| Hymono 4404™ | 1.5% |

The fat phase composition had an N₅ value of 55 and an N₃₀ value of 5.

### Aqueous Phase

| | |
|---|---|
| Kappa carrageenan (x 6960) | 2.5 % (by weight) |
| NaCl | 1.0% |
| Water | 96.5% |
| - Ph adjusted to 5.2 with lactic acid | |

The critical concentration of the aqueous phase composition was found to be 0.5 wt.%.

A spread was prepared while employing the same processing equipment and processing conditions as described in Example 1. The product obtained was easy spreadable, did not loose water on spreading and had an C₅-value of 1100. The volume weighted mean droplet size of the spread was found to be about 8 microns.

### Example 3

Example 1 was repeated twice with the exception that aqueous phases of different composition were utilized. The composition of these aqueous phases was as follows:

### Aqueous Phase (1)

| | |
|---|---|
| Kappa carrageenan (x6960) | 2.0 % (by weight) |
| NaCl | 1.8% |
| Water | 96.2 % |

### Aqueous Phase (2)

| | |
|---|---|
| Kappa carrageenan (x6960) | 2.0 % |
| NaCl | 1.0% |
| Potassium sorbate | 0.02 % |
| Water | 97.0% |

The products obtained were easy spreadable and did not exhibit loss of water on spreading. The volume weighted mean droplet size of the spread with aqueous phase (2) was 6 »m (microns).

### Comparative Example A

Example 3 was repeated, using aqueous phase (1), with the exception that the kappa carrageenan level employed was 1.0 wt% and therefore below the level of three times the critical concentration. The product obtained had a volume weighted mean droplet size of 9 microns. The product was found to be of poor quality. It showed tearing on spreading and was very brittle.

### Example B

Example 2 was repeated with the exception that the aqueous phase employed had the following composition:

### Aqueous Phase

| | |
|---|---|
| Kappa carrageenan (x6960) | 1.0 wt.% |
| NaCl | 1.8 wt% |
| Water | 97.2 wt.% |

The product so obtained was found to be of poor quality as it was very brittle and lost water on spreading. The volume weighted average droplet size was 8 »m (microns).

## Claims

1. Spread comprising from 5-35% by weight of a continuous fat phase and 95-65% by weight of a dispersed aqueous phase containing less than 200 ppm of protein, wherein the fat phase comprises at least 25% by weight of butter oil or a fraction thereof and the aqueous phase contains a gelling hydrocolloid or a combination of gelling hydrocolloids at a concentration level of at least 3.3 times the critical concentration level of said gelling hydrocolloid or combination of gelling hydrocolloids, the volume weighted mean droplet size of the aqueous phase being less than 25 »m (microns).

2. Spread according to claim 1, wherein the spread comprises from 15-28% by weight of a continuous fat phase and 85-72% by weight of a dispersed aqueous phase.

3. Spread according to claim 1 or 2, wherein the aqueous phase comprises one or more gelling hydrocolloids selected from the group consisting of: kappa-carrageenan, iota-carrageenan, agar, alginate, pectin, gellan, furcelleran and mixtures thereof.

4. Spread according to any one of claims 1-3, wherein the fat phase has an N₅ value in the range of 40-70 and an N₃₀ value of less than 8.

5. Spread according to any one of claims 1-4, wherein the fat phase contains at least 50 wt.% of butter oil or a low melting fraction thereof.

6. Spread according to any one of claims 1-5, wherein the spread contains from 0.5-2.5%, by weight of the fat phase, of emulsifier selected from the group consisting of: monoglycerides, diglycerides, phosphatides and mixtures thereof.

## Patentansprüche

1. Brotaufstrich, umfassend 5 bis 35 Gew.% einer kontinuierlichen Fettphase und 95 bis 65 Gew.% einer weniger als 200 ppm Protein enthaltenden dispersen wäßrigen Phase, wobei die Fettphase mindestens 25 Gew.% Butteröl oder eine Fraktion davon aufweist und die wäßrige Phase ein gelbildendes Hydrokolloid oder eine Kombination gelbildender Hydrokolloide in einer Konzentrationshöhe von mindestens 3,3mal der kritischen Konzentrationshöhe des besagten gelbildenden Hydrokolloids oder der Kombination gelbildender Hydrokolloide enthalt und worin die volumengewichtete Durchschnittströpfchengröße der wäßrigen Phase kleiner als 25 »m (Mikron) ist.

2. Brotaufstrich nach Anspruch 1, worin der Aufstrich zwischen 15 und 28 Gew.% einer kontinuierlichen Fettphase und 85 bis 72 Gew.% einer dispersen wäßrigen Phase aufweist.

3. Brotaufstrich nach Anspruch 1 oder 2, worin die wäßrige Phase ein oder mehrere gelbildende Hydrokolloide, ausgewählt aus der Gruppe bestehend aus kappa-Carrageenan, iota-Carrageenan, Agar, Alginat, Pektin, Gellan, Furcelleran und Mischungen davon, aufweist.

4. Brotaufstrich nach einem der Ansprüche 1 bis 3, worin die Fettphase einen N₅-Wert im Bereich von 40 bis 70 und einen N₃₀-Wert von weniger als 8 aufweist,

5. Brotaufstrich nach einem der Ansprüche 1 bis 4, worin die Fettphase mindestens 50 Gew.% Butteröl oder eine niedrigschmelzende Fraktion davon enthält.

6. Brotaufstrich nach einem der Ansprüche 1 bis 5, worin der Aufstrich, bezogen auf das Gewicht der Fettphase, 0,5 bis 2,5 Gew.% Emulgator, ausgewählt aus der Gruppe bestehend aus Monoglyceriden, Diglyceriden, Phosphatiden und Mischungen davon, enthält.

## Revendications

1. Produit à tartiner comprenant de 5 à 35% en poids d'une phase grasse continue et de 95 à 65% en poids d'une phase aqueuse dispersée renfermant moins de 200 ppm de protéines, produit dans lequel la phase grasse comprend au moins 25% en poids d'huile de beurre ou d'une fraction de celui-ci et la phase aqueuse contient un hydrocolloïde gélifiant ou une combinaison d'hydrocolloïdes gélifiants en une concentration d'au moins 3,3 fois la concentration critique dudit hydrocolloïde gélifiant ou de ladite combinaison des hydrocolloïdes gélifiants, la dimension moyenne des gouttelettes pondérée en volume de la phase aqueuse étant inférieure à 25 »m (microns).

2. Produit à tartiner selon la revendication 1, qui comprend de 15 à 28% en poids d'une phase grasse continue et de 85 à 72% en poids d'une phase aqueuse dispersée.

3. Produit à tartiner selon la revendication 1 ou 2, dans lequel la phase aqueuse comprend un ou plusieurs hydrocolloïde(s) gélifiant(s) choisi(s) parmi le kappa-carragheenane, le iota-carragheenane l'agar-agar, l'alginate, la pectine, le gellane, le furcellerane et des mélanges de ceux-ci.

4. Produit à tartiner selon l'une quelconque des revendications 1 à 3, dans lequel la phase grasse présente une valeur N₅ de 40 à 70 et une valeur N₃₀ inférieure à 8.

5. Produit à tartiner selon l'une quelconque des revendications 1 à 4 dans lequel la phase grasse contient au moins 50% en poids d'huile de beurre ou d'une fraction de celui-ci à bas point de fusion.

6. Produit à tartiner selon l'une quelconque des revendications 1 à 5, qui contient de 0,5 à 2,5% en poids de la phase grasse, d'un émulsifiant choisi parmi les monoglycérides, les diglycérides, les phosphatides et des mélanges de ceux-ci.
